# EUROPEAN PATENT APPLICATION

(11) **EP 1 367 778 A1**
(43) Date of publication of application: **03.12.2003**
(21) Application number: 02012100.0
(22) Date of filing: 31.05.2002
(51) Int. Cl.: H04L 12/56, G06F 15/173, G06F 15/80

(54) **Networked computer system and method using dual bi-directional communication rings**

(71) Applicant: Fujitsu Siemens Computers, LLC, Milpitas, CA 95035 (US)
(72) Inventor: Myers, Mark S., Portland 97219 Oregon (US)
(74) Representative: Epping Hermann & Fischer

(57) **Abstract**

The system and method using a routing component that is designed to accommodate and be interconnected within both a large and small networked system while using the same routing algorithm/software control for performing routing in both the large and small systems and for providing redundancy for increased system reliability and robustness.

## Description

### FIELD OF THE INVENTION

The present invention relates to networked computer systems, and more particularly to interconnecting computing nodes in a networked computer system using rings.

### DESCRIPTION OF RELATED ART

Networked computer systems are made-up of multiple interconnected computing nodes in which each node includes at least a single processing device. In general, a small number of computing nodes is referred to as a cluster system and a much larger networked system having many nodes is referred to as a massively parallel processor (MPP). Regardless of the number of nodes within a networked system each node must be able to communicate with all other nodes. There are several methods of communication between computing nodes in a networked system, the most suitable method being dependent on the number of computing nodes within the system.

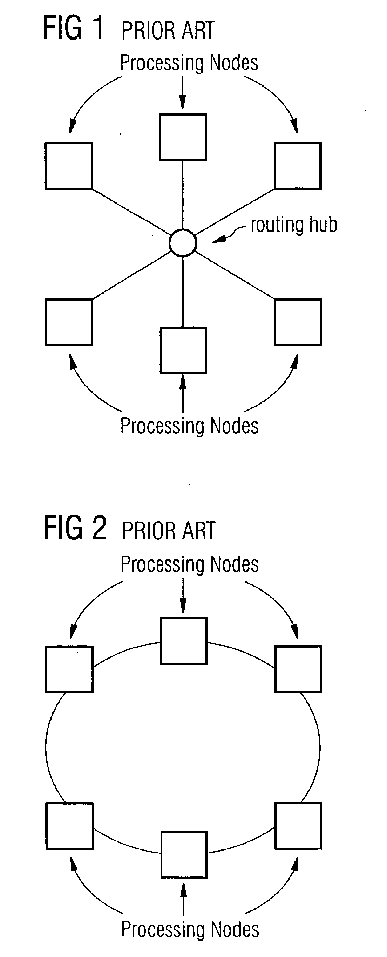

For instance, the simplest manner in which to interconnect and communicate between nodes is to use a single router, referred to as a hub, which essentially functions to route messages in the form of packets between each of the nodes. In this type of system, all messages are indirectly routed through the hub (Figure 1). The advantage of a hub system is that it is easy to design and implement, particularly in a large system and, as a result, MPP systems are generally implemented using a hub. However, as the number of nodes increases in a networked system, the efficiency of the hub decreases since so many messages must be routed through one location resulting in delays within the system. In addition, the risk of the hub failing or stalling, for example, due to broken cables, increases with increased traffic caused by the greater number of nodes. Furthermore, the increased amount of physical wire interconnections is also an undesirable effect of using a hub in a larger networked system. Finally, it is undesirable to use a hub in a larger networked system simply because, if the hub fails, the whole system fails which can be catastrophic. In other words, the hub represents a potential single point failure.

One of the main routing technique design consideration of a networked system is reliability. MPP systems are often designed with redundancies to ensure that if there is a point of failure within the system, that there still exists alternate routes within the system so as to avoid system shut down. One example of a design redundancy is bi-directional paths which provide alternate routes within the system so that if a single node within the system fails another route may be used. In a hub-based system, however, there is no redundancy which can take the place of a failed hub.

An alternative to a MPP hub-type routing system is a ring-type routing system in which nodes are connected together in a closed ring such that each node includes a processing component and a routing component (Figure 2). In this system, messages including routing information are routed by each node's routing component along the ring until it reaches its destination. The advantage of implementing a system using rings over a hub-based system is that the cost of the central hub is avoided along with the potential of a single point failure. However, a ring-type networked system is more difficult to implement and design than hub-based system. As a result, although the ring-type routing system is an optimal solution to a larger networked system it is generally thought of as an over design when considered in view of a smaller networked system since the routing requirements of a smaller system does not warrant the robustness and complexity of a ring-type system. As a consequence, smaller networked systems are not designed using ring-type routing, and instead are designed with the hub-type routing system that is implemented by simply reducing the number of processing nodes in the large MPP hub.

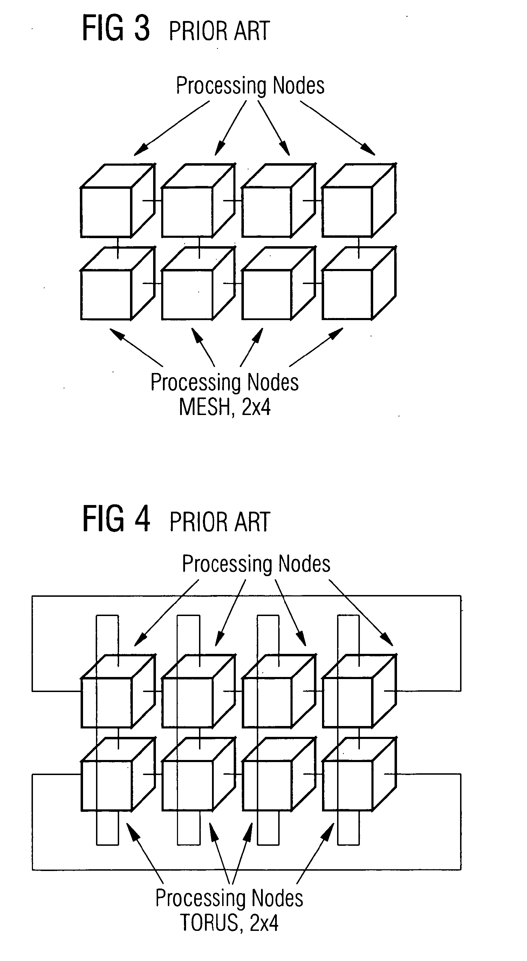

Another routing technique is implemented by interconnecting nodes into a mesh configuration. Figure 3 illustrates a two-dimensional mesh of processing nodes in which each node is interconnected to its adjacent node in the x and y directions. As shown, top and side peripheral nodes do not have adjacent nodes and hence no connection exists. In this type of system, messages in the form of packets including routing information are routed from a starting node through a sequence of nodes until they reach a desired destination node. However, which path is taken and the manner in which a packet is routed varies depending on the routing algorithm being used. Each node generally includes a router component (implemented in software or hardware) to facilitate the particular routing algorithm. In this type of system, a relatively long route is required for a message to travel from comer to corner of the mesh **(what size of network would this be used for?).**

In order to reduce route distance in a mesh configuration, in a modified mesh configuration the side and top nodes are interconnected with the opposite side or bottom nodes of the mesh to form a ring consisting of a row or column of processing nodes (Figure 4). This configuration is referred to as a Torus. Packets are routed to a side node and then wrapped around to the opposite side node in order to route a packet to its end destination. The Torus configuration offers alternative or shorter routes for packet routing in a MPP system when compared to a mesh configuration of the same size. Commonly, a Torus configuration is preferred over a hub-type configuration for a MPP system since it can avoid single point failures. The Torus configuration is generally classified as a ring-type routing/interconnection system and, as described above, ring-type routing systems are generally considered too robust for smaller cluster networks.

Due to the different advantages and disadvantages of each type of routing and interconnection configuration for various sized networks, it is currently common practice to design two completely different interconnection and routing system configurations each requiring a different routing element and routing algorithm/software design depending on the size (i.e. number of processing nodes) of the networked system. For instance, a larger networked system would be designed using a Torus configuration for reliability and robustness, whereas a mid-size or smaller networked system might use a hub-type system due to its ease of implementation and since hub-systems tend to be more reliable when implemented as smaller systems.

What is needed is a general method and system thereof, for routing messages between and interconnecting processing nodes that is adapted for all numbers of processing nodes and which includes design redundancy within the system so as to provide an overall robust multiple processor system of any size.

### SUMMARY OF THE INVENTION

The present invention, generally speaking, is a system and method for interconnecting processing nodes of a networked computer system for facilitating communication between nodes of varying numbers.

The system and method is implemented with a routing component that is designed to accommodate and be interconnected within both a large and small networked system while using the same routing algorithm/software control for performing routing in both the large and small systems and for providing redundancy for increased system reliability and robustness.

In one embodiment of the system and method, the routing component is used to form a smaller cluster type networked system having two bi-directional communication rings interconnecting nodes of the networked system. In this case, the routing element includes at least four bi-directional links where an individual bi-directional link includes two separate signal lines each transmitting data in the opposite direction with respect to each other. The four bi-directional links of each routing component are paired such that a first pair corresponds and is interconnected within a first bi-directional communication ring and a second pair corresponds and is interconnected within a second bi-directional ring. The dual bi-directional ring networked system is formed by interconnecting the pairs of links that correspond to each bi-directionbal ring together to form two independent bi-directional communication paths.

In another embodiment of the system and method, the routing component includes at least six bi-directional links. In this embodiment, the routing component can be used to implement either a large (i.e. a Torus configuration) or a small (i.e. a cluster) system. When utilized for interconnecting a multi-dimensional Torus, six bi-directional links are paired such that each pair corresponds each of the X, Y, and Z dimensions. The X, Y, and Z dimension bi-directional links are interconnected together to form a multi-dimensional Torus.

In still another embodiment in which the routing component including six bi-directional links is used to implement a one-dimensional Torus including dual bi-directional rings, a first pair of links is used to interconnect the nodes to form the first bi-directional ring, a second pair of links is used to interconnect the nodes to form the second bi-directional ring, and the remaining third pair of ports is unused.

### BRIEF DESCRIPTION OF THE DRAWINGS

**Figure 1** shows a prior art hub-based networked cluster system.
**Figure 2** shows a prior art ring-based networked system.
**Figure 3** shows a prior art mesh networked system.
**Figure 4** shows a prior art Torus networked system.
**Figure 5** shows one embodiment of a networked system in which processing nodes are interconnected using a routing component so as to form one-dimensional Torus having dual bi-directional communication rings.
**Figure 6A** shows one embodiment of a processing node including a processing component and a router component having six bi-directional links.
**Figure 6B** shows a functional block diagram of one embodiment of a routing component.
**Figure 6C** shows a functional block diagram of another embodiment of a routing component usable with the networked system shown in Figure 5.
**Figure 7** shows a networked system having processing nodes interconnected with the routing component shown in Figure 6A to form a multi-dimensional Torus.

### DESCRIPTION OF THE PREFERRED EMBODIMENTS

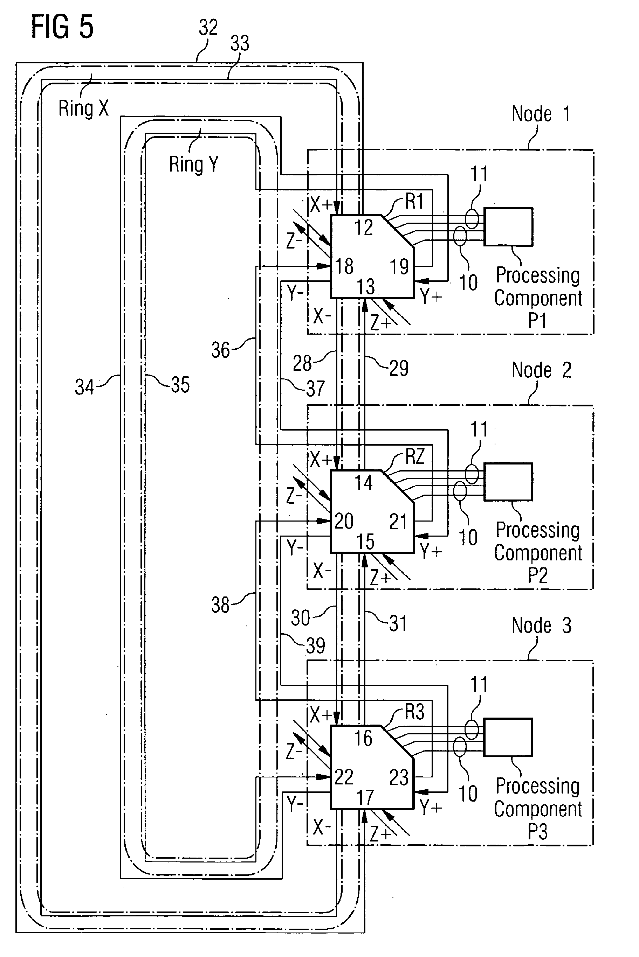

A multiple processor node networked system including node 1 - node 3 is shown in Figure 5. Each node includes processing components P1 - P3 and a corresponding router component (R1 - R3). Each processing component and corresponding router component are connected by two bi-directional inter-connections 10 and 11 referenced to as Fabric I/O ports - one associated with each of communication rings X and Y.

Processing components P1 - P3 may include fabric interface components, one or more processors and a memory system and can also include components such as standard I/O controllers. The fabric I/O ports can be implemented as two sets of parallel or serial connections.

Each router shown in Figure 5 has six bi-directional links which are coupled so as to form first and second bi-directional communication paths (ring X (26) and ring Y (27)) between node 1 - node 3. The six bi-directional links are paired so that a first pair (X+ and X-) corresponds to and is coupled within ring X, a second pair (Y+ and Y-) corresponds to and is coupled within ring Y, and a third pair (Z+ and Z-) is unused. Specifically, router R1 has a first pair of bi-directional links 12 and 13 corresponding to ring X and a second pair of bi-directional links 18 and 19 corresponding to ring Y. Similarly, router R2 includes a first pair of bi-directional links 14 and 15 (ring X) and a second pair of bi-directional links 20 and 21 (ring Y). Router R3 includes a first pair of bi-directional links 16 and 17 (ring X) and a second pair or bi-directional links 22 and 23 (ring Y).

Each bi-directional link includes individual incoming and outgoing signal lines which provide bi-directionality to each link. For example, as shown in Figure 5, link 13 shows an incoming signal line 29 of router 1 and an outgoing signal line 28 of router 1. Links are coupled such that positive bi-directional links (e.g. X+ and Y+) connect to negative bi-directional links (e.g. X- and Y-), respectively and individual incoming signal lines connect to individual outgoing signal lines and visa versa. For instance, the X+ link (14) of router 2 is connected to the X- link (13) of router 1 and individual signal lines are coupled to opposite direction signal lines.

The first communication path (ring X) between nodes 1 - 3 is formed by connecting bi-directional links 12 - 17 of router components R1 - R3 with multiple wire segments 28 - 33 that in aggregate form a ring in each direction (i.e. a bi-directional ring). Similarly, the second communication path (ring Y) between nodes 1 - 3 is formed by connecting bi-directional links 18 - 23 with multiple wire segments 34 - 39 that in aggregate form a ring in each direction (i.e. a bi-directional ring). Rings X and Y are independent communication paths in that nodes can communicate with other nodes within a given ring independent of the other ring. The router component is responsive to control information encoded within the packets being routed through the bi-directional ports and routes the packets to processing nodes according to the control information. In one embodiment routing information is encoded in a header portion of the packets.

A networked system implemented according to Figure 5 to include dual bi-directional rings connecting processing nodes includes two types of redundancy - dual ring redundancy and bi-directionality - resulting in a high performance and resilient system. The dual bi-directional ring architecture allows the system to be more tolerant of failures, while also providing twice the bandwidth by providing two possible paths (i.e., rings) for communicating over. System software, typically the operating system resident at each of the networked nodes, can use two routing approaches to recover from failed nodes. In a first approach, dual rings can be used to provide alternate routes on other rings. The software application controlling routing can be used to balance routing traffic between two rings during normal operation and in the event of a system failure. Second, bi-directional rings are used to provide alternate routes in the other direction around a ring. This routing approach is very useful when a node is powered down such that its router component is disabled, breaking both rings.

It should be noted that, although in the particular physical configuration of the nodes shown in Figure 5, (i.e., nodes 1 and 2 and nodes 2 and 3 are adjacent, while nodes 1 and 3 require a wrap around connection), this is not representative of any particular preferred configuration. For instance, the nodes could be equidistant. Instead, these nodes should be viewed as being coupled in a consecutive manner.

It should also be noted that the configuration of the processing nodes as shown in Figure 5 may be viewed as a degenerate case of a Torus (i.e., a one-dimensional Torus). In other words, a Torus is a mesh configuration in which side and top nodes wrap around to make connections with corresponding opposite side and bottom nodes. In a one-dimensional Torus, the processing nodes are configured in a single column or row of nodes in which each of the side nodes wrap around and connect to the opposite side.

Figure 5 also shows an additional set of unused bi-directional links. Hence, although in this embodiment the routing component is used to form a one-dimensional Torus having independent communication rings the same routing component design is adaptable to forming a multi-dimensional Torus by using all 6 bi-directional links. Furthermore, the router may also include more links to accommodate other system processing node configurations. Still further, the routing component may be designed with fewer links depending on the type of network configuration and application of the routing component. For instance, instead of using a routing component having six links in which one is unused in the embodiment shown in Figure 5, the routing component would be designed to have only four links.

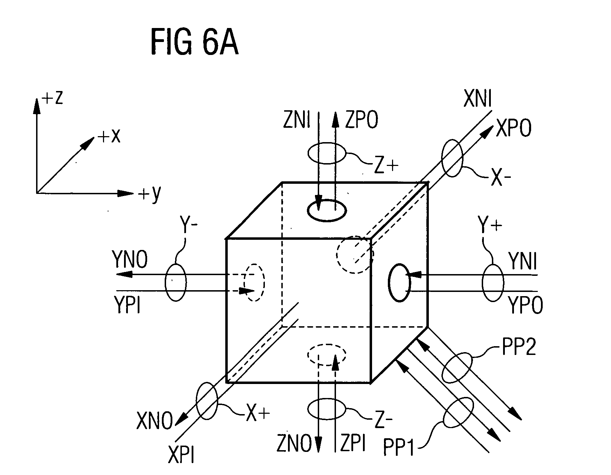

Figure 6A shows an embodiment of a router component shown in Figure 5 coupled to a processor node. The router includes paired bi-directional links X+ and X-paired bi-directional links Y+ and Y- and paired bi-directional links Z+ and Z-. It should be noted that links are labeled either "+" or "-" even though each bi-directional link comprises an individual incoming and outgoing signal lines. Labeling nodes in this manner provides an intuitive manner in which to couple nodes. For instance an X+ link always couples to an X- link of a consecutive node such that the individual incoming and outgoing signal lines from each bi-directional link properly align. The router component is coupled to the processor node through two sets of independent parallel or serial fabric I/O ports PP1 and PP2.

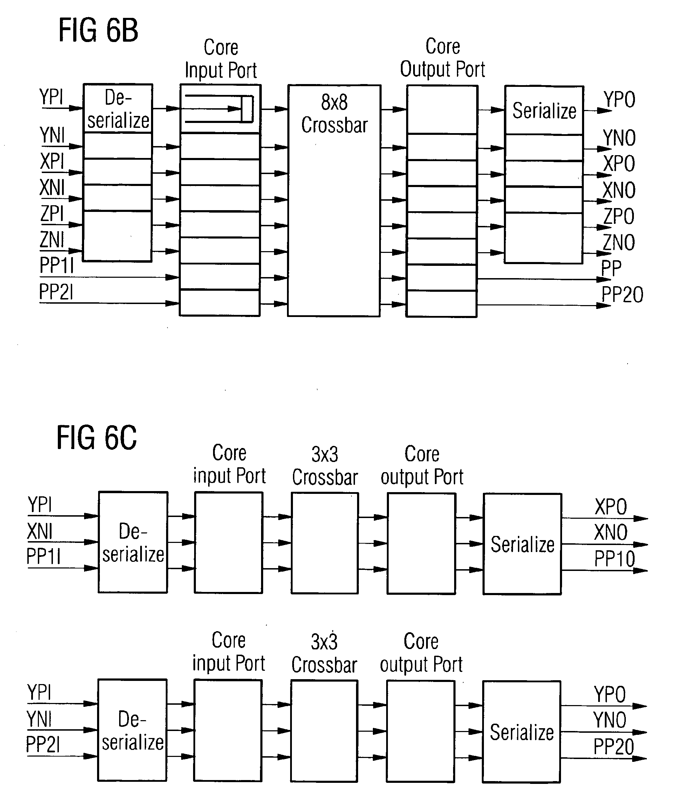

Figure 6B shows a functional block diagram of one embodiment of the router shown in Figure 6A in which the bi-directional links are serial links and processor fabric I/O ports PP1 and PP2 are bi-directional parallel ports. As described above each bi-directional link includes an individual incoming signal line and outgoing signal line. For convenience, individual signal lines are labeled so as to indicate 1) the alphanumeric link (either X, Y or Z), 2) the sign of the link (either P for "+" or N for "-"), and 3) whether it is an input or output link (either I or O). For instance, bi-directional link X+ includes an incoming signal line XPI and an outgoing signal line XPO. Similarly, bi-directional link X- comprises an incoming signal line XNI and an outgoing signal line XNO. Bi-directional ports Y+, Y-, Z+, Z-, PP1, and PP2 also comprise incoming and outgoing signal lines labeled similarly.

Each of the individual incoming signal lines including XPI, XNI, YPI, YNI, ZPI, and ZNI are coupled to the input of the de-serializer of the router shown in Figure 6B. Since ports PP1 and PP2 are parallel ports, de-serialization is unnecessary. The de-serializer converts the serial data received from each input port XPI, XNI, YPI, YNI, ZPI and ZNI into parallel data and couples it to the core input port of the router component. The core input port interprets routing information within the message packets and controls the crossbar to route the packets accordingly. The core input port may also include a memory portion for queuing packets to keep route order. The crossbar of the router functions to pass data received on any one of the input ports XPI, XNI, YPI, YNI, ZPI, ZNI, PP1I, and PP2I to any one of the output ports XPO, XNO, YPO, YNO, ZPO, ZNO, PP1O and PP2O. Parallel data from the crossbar is then coupled to the core output port and then to the serializer. The serializer puts the parallel data back into serial form so that it may be coupled to serial output ports XPO, XNO, YPO, YNO, ZPO, and ZNO. In the case of a processor fabric output ports, PP1O and PP2O, no serialization is required since, in this embodiment, PP1O and PP2O are parallel ports.

It should be understood that although Figure 6B shows one implementation of a router component, many implementations are possible. For instance in the case in which the router is coupled as shown in Figure 5 in which two independent bi-directional rings are formed, data being transmitted on the X+ and X- links is independent from data from data being transmitted on the Y+ and Y- links. As a result, the router in this type of system can be implemented with two crossbar networks associated with each ring (Figure 6C). Figure 6C shows a first crossbar in which input links XPI, XNI, and PP1I are coupled to a separate serializer and deserializer, core input and output port, through to output links XPO, XNO, and PP1O. Similarly, a second crossbar network is used for coupling data from the YPI, YNI, and PP2I links to one of the YPO, YNO, and PP2O links. Hence, data from each ring is routed independently within the router.

In the foregoing description of the method and system of communicating between processing nodes in a networked system, the router component used to implement the system is specifically adapted for providing bi-directional links for coupling nodes to form first and second bi-directional communication rings for a one-dimensional system. However, it is advantageous to provide a routing component that can be used to couple processing nodes of various sized systems.

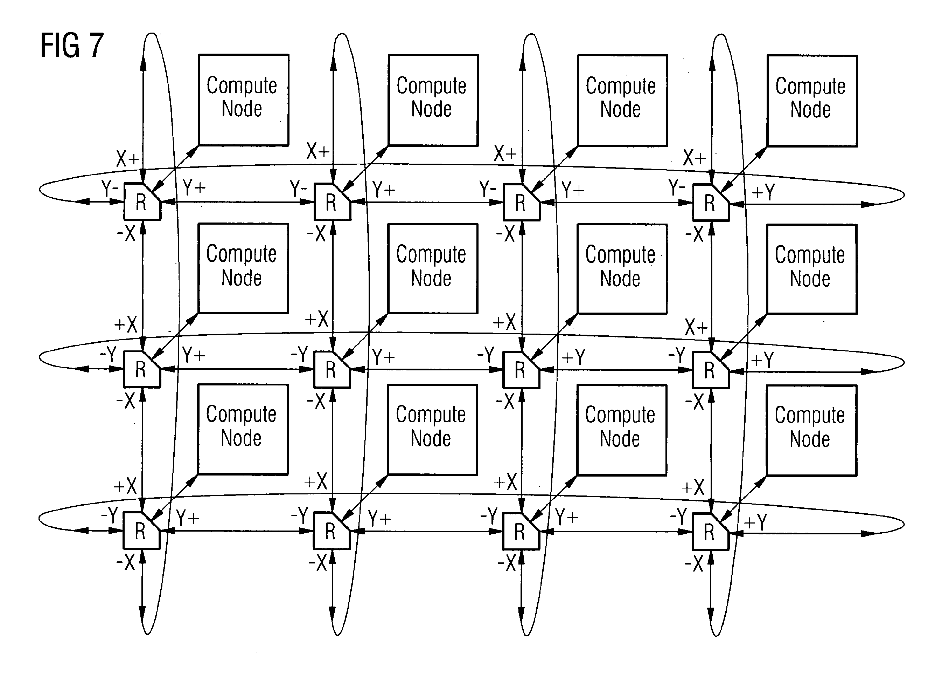

Figure 7 shows the embodiment of the routing component (R) shown in Figure 6A used to couple processing nodes of a networked system to form a multi-dimensional (2D) Torus. It should be noted that Figure 7 only shows a two dimensional (X and Y) slice of the networked system for clarity. As shown, each bi-directional link is coupled to consecutive bi-directional links in the same dimension. For instance, each of the X+ links are coupled to corresponding consecutive X- links, and each of the Y+ links are coupled to corresponding consecutive Y- links. It should be noted that the links can be either serial or parallel. Parallel links provide a faster path, however, they also require interconnect cables that are relatively large compared to serial link cables. Hence, the design decision as to whether a serial or parallel link is used is a tradeoff between cabling size and speed. In one embodiment of the present invention, bi-directional links that are physically disposed in close range (often on the same PCB) with respect to each other are implemented as parallel links. Whereas, processing nodes physically disposed at relatively large distances apart are generally implemented as serial links.

Since the same hardware component is used in both a one-dimensional system (Figure 5) and a multi-dimensional system (Figure 7) the same software application can be used. For instance, the hardware design of the routing component is one which is responsive to control information provided within the message packet no matter what the size or configuration of the network. As a result, the same software application/algorithm used to route messages in the one-dimensional Torus configuration with dual bi-directional rings, can be used to perform routing in the two-dimensional Torus configuration.

In contrast, in prior art networked systems different hardware and software applications as well as routing components and network configurations are used when implementing either a small or large networked system due to the inherently different design criteria for each of these types of systems. For instance, small networked systems (+1 to 6) can be implemented using a reduced function hub-type system configuration and as such uses a centralized hub router. This hub router is adapted to a software application unique to the hardware of the hub router. In contrast, larger prior art systems use a ring, mesh, or Torus type system configuration wherein the router component is localized to the processing nodes of the networked system and which uses a software application unique to the particular hardware of the localized router. As a result, the system and method of the present invention of using the same router component to implement both a one-dimensional and a multi-dimensional networked system represents a significant reduction is software and hardware design development and hence reduction of cost of networked systems.

In the preceding description, numerous specific details are set forth, such as specific processing node configurations in order to provide a thorough understanding of the present invention. It will be apparent, however, to one skilled in the art that these specific details need not be employed to practice the present invention. In other instances, well-known networked system structures and components have not been described in detail in order to avoid unnecessarily obscuring the present invention.

Moreover, although the components of the present invention have been described in conjunction with certain embodiments, it is appreciated that the invention can be implemented in a variety of other ways. Consequently, it is to be understood that the particular embodiments shown and described by way of illustration is in no way intended to be considered limiting. Reference to the details of these embodiments is not intended to limit the scope of the claims which themselves recite only those features regarded as essential to the invention.

## Claims

1. A method of interconnecting multiple processing nodes so as to provide a communication link between said nodes to form networked processing systems of varying sizes, said method comprising the steps of:
providing a plurality of routing components at least one routing component corresponding to each of said multiple processing nodes, each routing component including at least one input and output (I/O) port for coupling to said corresponding processing node and including at least four bi-directional links, each link comprising an in-going terminal and an out-going terminal, said at least four bi-directional links being paired into at least first and second pairs wherein each pair includes a link representing an in-coming link and a link representing an out-going link, said routing components being adapted for a given software control;
utilizing said plurality of routing components to form a first type of networked system comprising a first bi-directional ring of communication between said first set of processing nodes formed by coupling said first pairs of links and a second bi-directional ring of communication between said first set of processing nodes formed by coupling said second pairs of links, said each of said first and second bi-directional rings communicating with each of said first set of processing nodes through a separate processing node I/O port;
utilizing said plurality of routing components to form a second multi-dimensional type of networked system by coupling first pairs of links to form a first dimension of said multi-dimensional networked system, coupling second pairs of links to form a second dimension of said multi-dimensional networked system, and coupling third pairs of links to form a third dimension of said multi-dimensional networked system, said first, second, and third dimensions being relatively orthogonal to each other.

2. The method as described in Claim 1 wherein said second multi-dimensional type of networked system is a three-dimensional Torus and said first type of networked system in a one-dimensional Torus.

3. The method as described in Claim 1 further comprising the step of serially transmitting data along said first and second bi-directional rings.

4. The method as described in Claim 1 further comprising the step of transmitting parallel data along said first and second bi-directional rings.

5. The method as described in Claim 1 further comprising the step of implementing at least one pair of said at least four bi-directional links as parallel ports
wherein said at least one pair of said at least four bi-directional links is in relatively close proximity to other links of consecutive processing nodes.

6. A routing component for coupling multiple processing nodes into a networked system comprising:
at least two input and output (I/O) ports for coupling to one of said processing nodes;
at least four bi-directional links, each link comprising an in-going signal line and an out-going signal line, said at least four bi-directional links being paired into at least first and second pairs wherein each pair includes a link representing an in-coming link and a link representing an out-going link, said routing components being adapted for a given software control which can control routing of networked systems in a variety of configurations;
wherein, in a first case, a plurality of said routing components can be coupled into a first configuration so as to form first and second bi-directional communication rings for communicating with said multiple processing nodes, wherein said first pairs of links are coupled within said first bi-directional ring and said second pairs of links are coupled within said second bi-directional ring, and wherein said each of said first and second bi-directional rings independently communicate with each of said plurality of processing nodes;
wherein, in a second case, a plurality of said routing components can be being coupled into a second configuration so as to form a multi-dimensional Torus wherein said first pairs of links are coupled to form a first dimension of said multi-dimensional networked Torus, said second pairs of links are coupled to form a second dimension of said multi-dimensional networked Torus, and a third pair of links are coupled to form a third dimension of said multi-dimensional networked Torus, said first, second, and third dimensions being relatively orthogonal to each other.

7. The system as described in Claim 6 wherein said routing component comprises at least six bi-directional links and when implementing said first configuration at least one pair of said six links are unused in each of said routing component .

8. The system as described in Claim 6 wherein said first and second bi-directional pairs of ports are serial ports.

9. The system as described in Claim 5 wherein at least one of said first and second bi-directional pairs of ports is a parallel port.
